Europäisches Patentamt

European Patent Office

Office européen des brevets

(11) Veröffentlichungsnummer: **0 075 788**
**B1**

(12) **EUROPÄISCHE PATENTSCHRIFT**

(45) Veröffentlichungstag der Patentschrift:
02.01.85

(21) Anmeldenummer: **82108551.1**

(22) Anmeldetag: **16.09.82**

(51) Int. Cl.³: **H 04 B 1/16**

(54) Verfahren zur Überwachung einer Funkempfangsanlage.

(30) Priorität: **29.09.81 DE 3138650**

(43) Veröffentlichungstag der Anmeldung:
**06.04.83 Patentblatt 83/14**

(45) Bekanntmachung des Hinweises auf die Patenterteilung:
**02.01.85 Patentblatt 85/1**

(84) Benannte Vertragsstaaten:
**AT DE FR GB NL SE**

(56) Entgegenhaltungen:
**DE - A - 2 755 221**

(73) Patentinhaber: **Felten & Guilleaume Fernmeldeanlagen GmbH, Thurn-und-Taxis-Strasse 10 Postfach 4943, D-8500 Nürnberg 10 (DE)**

(72) Erfinder: **Grohmann, Erich, Ing.-grad., Grillenweg 36, D-8501 Feucht (DE)**

(74) Vertreter: **Peuckert, Hermann, Philips Patentverwaltung GmbH Billstrasse 80 Postfach 10 51 49, D-2000 Hamburg 28 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren gemäß Oberbegriff des Anspruches 1.

Aus der DE-OS 2 755 221 ist ein Verfahren zur Überwachung eines Funkempfängers bekannt. Bei diesem Verfahren wird als Testsignal ein breitbandiger Rauschsignalimpuls während der Empfangspausen an den HF-Eingang des Empfängers angelegt. Von diesem Rauschsignalimpuls werden zwei Teilsignale, das eine an der ZF-Stufe, das andere an der NF-Stufe des Empfängers abgeleitet und gleichgerichtet. Jedes der beiden Teilsignale wird mit einem Schwellwert verglichen. Der eine Schwellwert ist so gewählt, daß er zwischen den Amplituden des bei gestörter bzw. bei ungestörter HF-Empfindlichkeit auftretenden einen Teilsignales liegt, während der andere Schwellwert so gewählt ist, daß er zwischen den Amplituden des bei gestörtem bzw. ungestörtem NF-Ausgangspegel auftretenden anderen Teilsignales liegt. Nach den beiden Schwellwertvergleichen werden die Teilsignale digital so weiter verarbeitet, daß während der Dauer des Rauschsignalimpulses beim Fehlen eines oder beider Teilsignale ein Signal zur Anzeige einer Störung abgegeben wird.

In größeren Funkempfangsanlagen können z. B. mehrere Funkempfänger über einen gemeinsamen Antennenverstärker mit einer Antenne verbunden sein. In diesem Fall genügt es nicht, nur einen Funkempfänger zu überwachen. Vielmehr ist es wünschenswert, alle Funktionseinheiten, Funkempfänger und Antennenverstärker zu überwachen.

Aufgabe der Erfindung ist es deshalb, ein Verfahren zur Überwachung eines Antennenverstärkers und mehrerer an ihn angeschlossener Funkempfänger anzugeben.

Die Erfindung löst diese Aufgabe mit den im Anspruch 1 angegebenen kennzeichnenden Merkmalen. Vorteilhafte Ausgestaltungen der Erfindung sind in den Unteransprüchen angegeben.

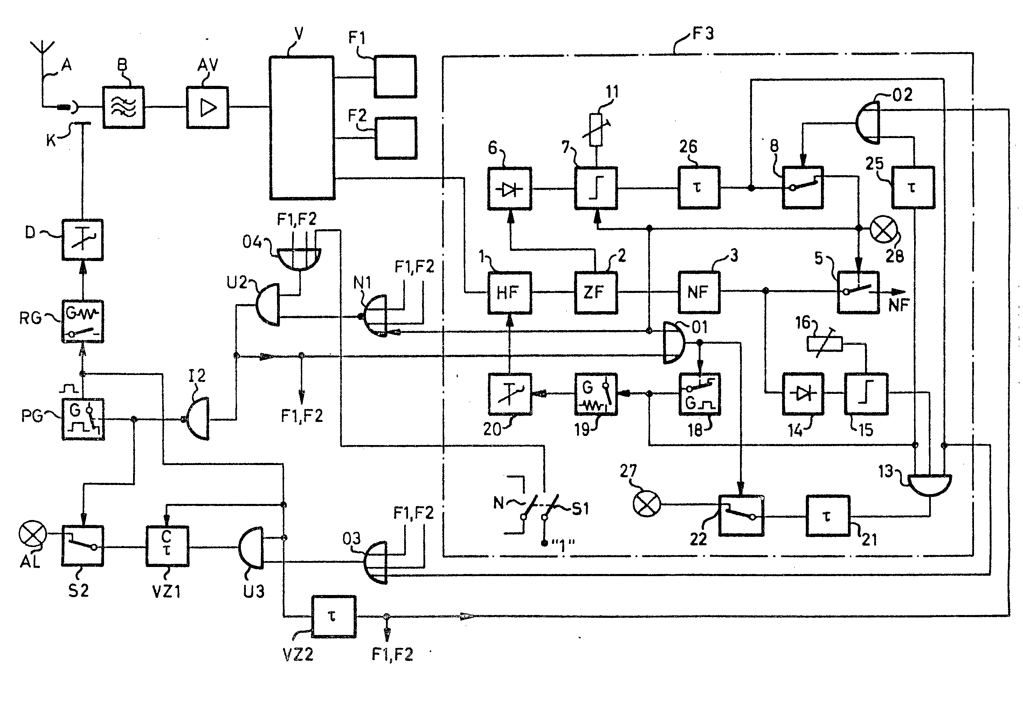

Das erfindungsgemäße Verfahren sei anhand eines Ausführungsbeispieles erläutert, das in der Figur gezeigt ist.

Eine Antenne A ist mit dem Eingang eines Bandpasses B verbunden, dessen Ausgang mit dem Eingang des zu überwachenden Antennenverstärkers AV verbunden ist. Der Ausgang des Antennenverstärkers AV ist mit einer Verzweigung V verbunden, an die drei gleiche Funkempfänger F1, F2 und F3 angeschlossen sind, von denen der Einfachheit halber nur der Funkempfänger F3 im Detail gezeigt ist.

Der Aufbau der drei Funkempfänger F1—F3 entspricht bis auf wenige Ergänzungen dem Aufbau desjenigen Funkempfängers, der in der Figur der DE-OS 2 755 221 gezeigt ist. Aus diesem Grund sind die gleichen Bezugszeichen wie in der DE-OS 2 755 221 für gleiche Bauteile der Funkempfänger gewählt worden. Außerdem wird auf die Bauteile, die zusätzlich in den Funkempfängern F1—F3 eingebaut sind, besonders hingewiesen.

Der Funkempfänger F3 weist eine HF-Stufe 1, deren Eingang mit der Verzweigung V verbunden ist, eine ZF-Stufe 2 und eine NF-Stufe 3 auf. Zwischen die NF-Stufe 3 und den Empfängerausgang ist ein als Krachsperre wirkender Schalter 5 geschaltet. Die ZF-Stufe 2 ist mit einem Gleichrichter 6 verbunden, der an den Eingang eines Schwellwertschalters 7 angeschlossen ist. Der Ausgang des Schwellwertschalters 7, dessen Schwellwert mittels eines einstellbaren Widerstandes 11 verstellt werden kann, ist mit dem Eingang einer Verzögerungsschaltung 26 verbunden. Der Ausgang der Verzögerungsschaltung 26 ist sowohl mit dem ersten Eingang eines UND-Gatters 13 als auch mit dem Eingang eines steuerbaren Schalters 8 verbunden. An den Ausgang des Schalters 8 sind der Steuereingang des als Krachsperre wirkenden Schalters 5, ein Stelleingang des Schwellwertschalters 7, eine Anzeigelampe 28 und der erste Eingang eines ODER-Gatters 01 angeschlossen. Der Ausgang der NF-Stufe 3 ist mit einem Gleichrichter 14 verbunden, der an den Eingang eines Schwellwertschalters 15 angeschlossen ist. Der Ausgang des Schwellwertschalters 15, dessen Schwellwert mittels eines einstellbaren Widerstandes 16 verstellt werden kann, ist mit dem zweiten Eingang des UND-Gatters 13 verbunden. An den dritten Eingang des UND-Gatters 13 sind der Eingang einer Verzögerungsschaltung 25, der Ausgang eines Prüfimpulsgenerators 18 und der Steuereingang eines Rauschgenerators 19 angeschlossen. Der Ausgang der Verzögerungsschaltung 25 ist mit dem ersten Eingang eines ODER-Gatters 02 verbunden, dessen Ausgang an den Steuereingang des Schalters 8 angeschlossen ist. Der Ausgang des UND-Gatters 13 ist über eine Verzögerungsschaltung 21 mit dem Eingang eines steuerbaren Schalters 22 verbunden. An den Ausgang des ODER-Gatters 01 sind der Steuereingang des Schalters 22 und der Schalteingang des Prüfimpulsgenerators 18 angeschlossen. Der Ausgang des Rauschsignalgenerators 19 ist über ein einstellbares Dämpfungsglied 20 mit der HF-Stufe 1 verbunden. An den Ausgang des steuerbaren Schalters 22 ist eine Anzeigelampe 27 angeschlossen. Der Eingang eines Schalters S1, der zusammen mit dem Netzschalter N geöffnet und geschlossen wird, liegt an logisch »1«.

Bis auf die ODER-Gatter 01 und 02 und die Schalter S1 und N stimmt der Aufbau des Funkempfängers F3 mit dem Aufbau des Funkempfängers aus der DE-OS 2 755 221 überein.

Die Überwachungsschaltung für den Antennenverstärker AV ist nun folgendermaßen aufgebaut: Der Ausgang des Verzögerungsgliedes 26 ist mit dem ersten Eingang eines ODER-Gatters 03 verbunden. Die restlichen beiden Eingänge des ODER-Gatters 03 sind entsprechend mit den Ausgängen der Verzögerungsglieder 26 der Funkempfänger F1 und F2 verbunden.

Der zweite Eingang des ODER-Gatters 01 ist mit dem ersten Eingang eines NOR-Gatters N1 verbunden. Entsprechend sind der zweite und dritte Eingang des NOR—Gatters N1 mit dem zweiten Eingang des ODER-Gatters 01 der Funkempfänger F1 und F2 verbunden.

Der Ausgang des Schalters S1 ist mit dem ersten Eingang eines ODER-Gatters 04 verbunden. Der zweite und dritte Eingang des ODER-Gatters 04 sind entsprechend mit dem Ausgang des Schalters S1 der Funkempfänger F1 und F2 verbunden.

Der Ausgang des NOR-Gatters N1 ist mit dem ersten Eingang und der Ausgang des ODER-Gatters 04 ist mit dem zweiten Eingang eines UND-Gatters U2 verbunden. Der Ausgang des UND-Gatters U2 ist sowohl mit dem zweiten Eingang eines jeden ODER-Gatters 01 der Funkempfänger F1—F3 als auch mit dem Eingang eines Inverters I2 verbunden. An den Ausgang des Inverters I2 sind der Schalteingang eines Prüfimpulsgenerators PG und der Steuereingang eines Schalters S2 angeschlossen, dessen Ausgang mit einer Anzeigelampe AL und dessen Eingang mit dem Ausgang einer Verzögerungsschaltung VZ1 verbunden ist. Der Eingang der Verzögerungsschaltung VZ1 ist mit dem Ausgang eines UND-Gatters U3 verbunden, dessen erster Eingang mit dem Ausgang des ODER-Gatters 03 verbunden ist.

Der zweite Eingang des UND-Gatters U3 ist sowohl mit dem Eingang einer Verzögerungsschaltung VZ2, deren Ausgang mit dem zweiten Eingang eines jeden ODER-Gatters 02 der Funkempfänger F1—F3 verbunden ist, als auch mit dem Ausgang des Prüfimpulsgenerators PG verbunden.

Der Ausgang des Prüfimpulsgenerators PG ist außerdem mit dem Schalteingang eines Rauschgenerators RG verbunden. Der Ausgang des Rauschgenerators ist über ein einstellbares Dämpfungsglied D und eine Koppelvorrichtung K mit dem Eingang des Bandpasses B verbunden.

Die einzelnen Funkempfänger werden folgendermaßen überwacht: Während Empfangspausen wird in gleichen Zeitabständen für kurze Zeit ein Rauschsignal eines Rauschgenerators als Testsignal an dem Empfängereingang angelegt. Von diesem Testsignal werden zwei Teilsignale, das eine an der ZF-Stufe, das andere an der NF-Stufe abgegriffen und gleichgerichtet. Jedes der gleichgerichteten Teilsignale wird geprüft, ob es einen vorgegebenen Schwellwert überschreitet, indem es einem Schwellwertschalter zugeführt wird. Wenn bereits ein Teilsignal den vorgegebenen Schwellwert nicht überschreitet, zeigt ein Signal eine Störung des Funkempfängers an. Wenn ein Nutzsignal am Empfängereingang anliegt, wird das zu Testzwecken erzeugte Rauschsignal nicht mehr dem Empfängereingang zugeführt.

Zur Überwachung des Antennenverstärkers wird an seinen Eingang ein breitbandiger Rauschsignalimpuls gelegt und gleichzeitig wird die Überwachung in den einzelnen Funkempfängern abgeschaltet. Der Rauschsignalimpuls gelangt über die Verzweigung an den HF-Eingang eines jeden Funkempfängers, wo jeweils wie in der DE-OS 2 755 221 beschrieben an den ZF-Stufen und nach den NF-Stufen Teilsignale abgegriffen, gleichgerichtet und mit einem Schwellwert verglichen werden.

Um das Zusammenwirken der Überwachung der einzelnen Funkempfänger mit der Überwachung des Antennenverstärkers zu erklären, ist es sinnvoll, zwei Fälle zu unterscheiden:

1. Mindestens einer der drei Funkempfänger F1—F3 ist von einem Nachrichtensignal beaufschlagt.
2. Keiner der drei Funkempfänger F1—F3 ist von einem Nachrichtensignal beaufschlagt.

### 1. Fall

Es ist beispielsweise der Funkempfänger F3 von einem Nachrichtensignal beaufschlagt, während die beiden Funkempfänger F1 und F2 nicht mit Nachrichtensignalen beaufschlagt sind.

Die Funkempfänger F1 und F2 werden dann nach dem in der DE-OS 2 755 221 beschriebenen Verfahren überwacht. Die Überwachung des Antennenverstärkers ist dagegen abgeschaltet: Am ersten Eingang des NOR-Gatters N1 liegt die Empfängerbeaufschlagtmeldung des Funkempfängers F3 in Form einer logischen »1«, so daß am Ausgang des NOR-Gatters N1 und somit an einem Eingang des UND-Gatters U2 eine logische »0« anliegt.

Deshalb liegt, obwohl an mindestens einem Eingang des ODER-Gatters 04 und damit auch an seinem Ausgang eine logische »1« anliegt, am Ausgang des UND-Gatters U2 eine logische »0«. Diese logische »0« bewirkt über den Inverter I2, daß der Prüfimpulsgenerator PG keine Impulse zur Ansteuerung des Rauschgenerators RG abgibt.

Es werden deshalb keine Rauschsignalimpulse am Eingang des Bandpasses B eingekoppelt. Der Antennenverstärker AV wird also nicht überwacht.

Die Überwachung im Funkempfänger F3, der von einem Nachrichtensignal beaufschlagt ist, ist ebenfalls abgeschaltet, weil die logische »1« der Empfängerbeaufschlagtmeldung über das ODER-Gatter 01 verhindert, daß der Prüfimpulsgenerator 18 Prüfimpulse abgibt.

### 2. Fall

Alle drei Funkempfänger F1—F3 sind eingeschaltet, jedoch ist keiner mit einem Nachrichtensignal beaufschlagt. In diesem Fall wird nur der Antennenverstärker AV überwacht, wie im folgenden erläutert wird.

Wenn keiner der drei Funkempfänger F1—F3 mit einem Nachrichtensignal beaufschlagt ist, liegen alle Eingänge des NOR-Gatters N1 auf logisch »0«, denn kein Funkempfänger gibt eine Empfängerbeaufschlagtmeldung in Form einer logischen »1« ab. Dagegen liegt an allen Eingängen des ODER-Gatters 04 eine logische »1«, weil zusammen mit den Netzschaltern N alle Schalter S1 der Funkempfänger F1—F3 geschlossen sind.

Infolge der logischen »1« an den beiden Eingängen des UND-Gatters U2 geht der Ausgang des UND-Gatters U2 ebenfalls auf logisch »1«.

Diese logische »1« am Ausgang des UND-Gatters U2 bewirkt, daß keiner der Prüfimpulsgeneratoren 18 in den Funkempfängern Prüfimpulse abgibt, daß gleichzeitig alle Schalter 22 der Funkempfänger geöffnet werden und daß der Prüfimpulsgenerator PG infolge des Inverters I2 eine logische »0« an seinem Schalteingang erhält, durch die der Prüfimpulsgenerator PG eingeschaltet und gleichzeitig der Schalter S2 geschlossen wird.

Der Rauschgenerator RG wird von dem Prüfimpulsgenerator PG nun in Zeitabständen von ca. 30 s für kurze Zeit, z. B. 100 ms, eingeschaltet. Über das einstellbare Dämpfungsglied D und die Koppelvorrichtung K werden die Rauschsignalimpulse über den Bandpaß B auf den Eingang des Antennenverstärkers AV gekoppelt. Die Dämpfung der Koppelvorrichtung K ist so gewählt, daß ein von der Antenne A empfangenes Nachrichtensignal nicht nennenswert gedämpft wird.

Über die Verzweigung V gelangen die Rauschsignalimpulse des Rauschgenerators RG auf die Eingänge aller angeschlossenen Funkempfänger F1—F3. Alle Funkempfänger sind nun mit breitbandigen Rauschsignalimpulsen beaufschlagt.

Mittels des Dämpfungsgliedes D wird die Amplitude der Rauschsignalimpulse so eingestellt, daß sie um einen bestimmten Wert — z. B. 6 dB — über der Ansprechschwelle der in den Funkempfängern vorhandenen Krachsperren (Schalter 5) liegt, deren Aufgabe darin besteht, beim Eintreffen eines Nachrichtensignales den NF-Weg des Funkempfängers durchzuschalten. Dabei ist vorausgesetzt, daß bei den an einen Antennenverstärker angeschlossenen Funkempfängern die Ansprechschwellen aller Krachsperren auf denselben Wert eingestellt sind.

Solange der Prüfimpulsgenerator PG einen Impuls abgibt, werden daher alle an die Verzweigung angeschlossenen Funkempfänger mit Rauschsignalimpulsen beaufschlagt und liefern an den Ausgängen der Verzögerungsschaltungen 26 Signale in Form einer logischen »1«, die im ODER-Gatter 03 miteinander verknüpft werden, so daß am Ausgang des ODER-Gatters 03 eine logische »1« anliegt.

Diese logische »1« am Ausgang des ODER-Gatters 03 wird mit dem vom Prüfimpulsgenerator PG gelieferten Impuls im UND-Gatter U3 verknüpft, dessen Ausgang über die Verzögerungsschaltung VZ1 und den Schalter S2 die Anzeigelampe AL ansteuert. Die Verzögerungsschaltung VZ1 kann z. B. aus einem 6-Bit-Schieberegister bestehen. Liegt während der Impulsdauer keine logische »1« an dem einen Eingang des UND-Gatters U3, so wird ein Störungsimpuls in das Schieberegister gegeben. Erst sechs aufeinanderfolgende Störungsimpulse lösen dann eine Störungsmeldung mittels der Anzeigelampe AL aus. Damit wird eine große Sicherheit gegenüber Fehlauswertungen erreicht.

Aus dem Impuls am Ausgang des Prüfimpulsgenerators PG wird mittels der Verzögerungsschaltung VZ2 ein verzögerter Impuls gewonnen, der den zweiten Eingängen der ODER-Schaltungen 02 aller Funkempfänger F1—F3 zugeführt wird. Dieser Impuls verhindert ein Durchschalten der in den Funkempfängern F1—F3 als Krachsperren wirkenden Schalter 5 während der Dauer des Prüfimpulses, damit keine Rauschsignalimpulse auf die NF-Ausgangsleitungen gelangen. Die Verzögerungsschaltung VZ2 bewirkt, daß eine Durchschaltung der Krachsperren auch noch kurze Zeit — ca. 20 ms — nach Ablauf des Prüfimpulses verhindert wird, um Ausschwingvorgänge des ZF-Quarzfilters und Entladevorgänge der ZF-Gleichrichterschaltung zu unterdrücken.

Durch die Verknüpfung im ODER-Gatter 03 muß nur einer der drei Funkempfänger F1—F3 am Ausgang der Verzögerungsschaltung 26 während der Dauer des vom Prüfimpulsgenerator PG gelieferten Impulses ein Signal abgeben, um die Überwachung des Antennenverstärkers zu gewährleisten. Die anderen beiden Funkempfänger können gestört oder mittels Schalter abgeschaltet sein.

Sind alle Funkempfänger F1—F3 abgeschaltet, so ist keine Überwachung möglich. In diesem Fall liegt am Ausgang des ODER-Gatters 04 eine logische »0«. Am Ausgang des UND-Gatters U2 liegt damit ebenfalls eine logische »0«, und der Prüfimpulsgenerator PG wird abgeschaltet. Durch diese Maßnahme wird eine fehlerhafte Störungsmeldung verhindert.

Sobald einer der Funkempfänger durch ein Nachrichtensignal beaufschlagt wird, liefert er am Ausgang des Schalters 8 die Empfängerbeaufschlagtmeldung in Form einer logischen »1«. Mittels des NOR—Gatters N1, des UND-Gatters U2 und des Inverters I2 wird der Prüfimpulsgenerator PG abgeschaltet. Gleichzeitig wird durch die Empfängerbeaufschlagtmeldung mittels des ODER-Gatters 01 weiterhin verhindert, daß der Prüfimpulsgenerator 18 Impulse abgibt. Dagegen wird in den nicht mit einem Nachrichtensignal beaufschlagten Prüfempfängern der Prüfimpulsgenerator 18 eingeschaltet, weil an seinem Schalteingang nicht die logische »1« einer Empfängerbeaufschlagtmeldung, sondern eine logische »0« anliegt.

**Patentansprüche**

1. Verfahren zur Überwachung einer Funkempfangsanlage, in der mehrere Funkempfänger über einen gemeinsamen Antennenverstärker an eine Antenne angeschlossen sind, wobei die Funkempfänger überprüft werden, ob sie beaufschlagt sind, dadurch gekennzeichnet, daß der Antennenverstärker nur dann überwacht wird, wenn kein Funkempfänger beaufschlagt ist, und daß dann, wenn nicht alle, jedoch mindestens ein Funkempfänger beaufschlagt ist, der bzw. die gerade nicht beaufschlagten Funkempfänger überwacht werden.

2. Verfahren nach Anspruch 1, dadurch gekennzeichnet, daß zur Überwachung des Antennenverstärkers an seinen Eingang ein breitbandiger Rauschsignalimpuls gelegt wird, daß in jedem Funkempfänger ein Teilsignal des Rauschsignalimpulses an der ZF-Stufe abgeleitet, gleichgerichtet und mit einem Schwellwert verglichen wird, der zwischen den Amplituden des im Falle gestörten bzw. ungestörten Antennenverstärkers auftretenden Teilsignales liegt, und daß alle auf diese Weise in den Funkempfängern gewonnenen Teilsignale digital so verarbeitet werden, daß während der Dauer des Rauschsignalimpulses beim Fehlen aller Teilsignale eine Störung angezeigt wird.

3. Verfahren nach Anspruch 1 oder 2, dadurch gekennzeichnet, daß aus jedem Funkempfänger eine Empfängerbeaufschlagtmeldung und eine In-Betrieb-Meldung abgeleitet werden, daß alle Empfängerbeaufschlagtmeldungen und alle In-Betrieb-Meldungen in einer logischen Schaltung miteinander verknüpft werden und daß die Überwachung des Antennenverstärkers in Abhängigkeit vom Ergebnis der Verknüpfung gesteuert wird.

4. Verfahren anch Anspruch 3, dadurch gekennzeichnet, daß die logische Schaltung einen Prüfimpulsgenerator ansteuert, der mit einem Rauschgenerator verbunden ist, dessen Ausgang auf den Eingang des Antennenverstärkers gekoppelt ist.

## Claims

1. A method of monitoring radio receiving equipment in which several radio receivers are connected to an aerial via a common aerial amplifier, a check being made as to whether the radio receivers are operative, characterized in that the aerial amplifier is monitored only when no radio receiver is operative, and that when at least one receiver but not all the radio receivers is (are) operative, the radio receiver(s) operative at that moment is (are) monitored.

2. A method as claimed in Claim 1, characterized in that in order to monitor the aerial amplifier a wide-band noise signal pulse is applied to its input, that in each radio receiver a signal which is proportional to the noise signal pulse is derived from the ZF-stage, is rectified and compared to a threshold value, which is located between the amplitudes of the said proportional signals occuring with a disturbed or non-disturbed aerial amplifier, respectively, and that all the proportional signals thus recovered in the radio receivers are digitally processed such that for the duration of the noise signal pulse, if all the proportional signals are absent an interference is indicated.

3. A method as claimed in Claim 1 or 2, characterized in that there are derived from each radio receiver a message indicating that a signal is applied to the receiver and an in-operation message, that all the signal — received and in — operation messages are combined in a digital circuit and that the monitoring operation of the aerial amplifier is controlled in dependence on the result of the logic processing operation.

4. A method as claimed in Claim 3, characterized in that the logic circuit drives a test pulse generator which is connected to a noise generator, whose output is coupled to the input of the aerial amplifier.

## Revendications

1. Procédé de surveillance d'une installation radioréceptrice dans laquelle plusieurs radiorécepteurs sont raccordés à une antenne à travers un amplificateur d'antenne commun, procédé suivant lequel on contrôle si un signal est appliqué aux radiorécepteurs, caractérisé en ce que l'amplificateur d'antenne n'est surveillé que si aucun radiorécepteur ne reçoit un signal et en ce que, si un ou plusieurs radiorécepteurs mais non pas tous les radiorécepteurs reçoivent un signal, on surveille le(s) radiorécepteur(s) qui, à cet instant, ne reçoivent pas de signal.

2. Procédé selon la revendication 1, caractérisé en ce que pour la surveillance de l'amplificateur d'antenne, une impulsion de signal de bruit est appliquée à son entrée, en ce que dans chaque radiorécepteur, un signal partiel de l'impulsion de signal de bruit est dérivé de l'étage F1, est redressé et est comparé avec un valeur de seuil qui se situe entre les amplitudes desdits signaux partiels apparaissant respectivement dans le cas d'un amplificateur d'antenne perturbé et non perturbé et en ce que tous les signaux partiels ainsi déduits dans les radiorécepteurs sont soumis à un traitement numérique tel que pour la durée de l'impulsion de signal de bruit, une perturbation est indiquée si tous les signaux partiels sont absents.

3. Procédé selon l'une quelconque des revendications 1 et 2, caractérisé en ce qu'on déduit de chacun des radiorécepteurs un message indiquant qu'un signal est appliqué au récepteur ainsi qu'un message en service, en ce que tous les messages d'application d'un signal au récepteur et tous les messages en service sont enchaînés dans un circuit logique et en ce que la surveillance de l'amplificateur d'antenne est commandée en fonction du résultat de l'enchaînement.

4. Procédé selon la revendication 3, caractérisé en ce que le circuit logique commande un générateur d'impulsions de contrôle qui est relié à un générateur de bruit dont la sortie est couplée à l'entrée de l'amplificateur d'antenne.